# DEMANDE DE BREVET EUROPEEN

(11) **EP 3 425 565 A1**
(43) Date de publication de la demande: **09.01.2019**
(21) Numéro de dépôt: 18305879.1
(22) Date de dépôt: 04.07.2018
(51) Int. Cl.: G06K 9/20, G06K 9/00

(54) **PROCÉDÉ DE TRAITEMENT D'UNE IMAGE MONTRANT UN DOCUMENT STRUCTURÉ COMPRENANT UNE ZONE D'INSPECTION VISUELLE À PARTIR D'UNE ZONE DE LECTURE AUTOMATIQUE OU DE TYPE CODE-BARRES**

(30) Priorité: 04.07.2017 FR 1756290
(71) Demandeur: Idemia Identity & Security France, 92130 Issy-les-Moulineaux (FR)
(72) Inventeur: DURA, Jérémy, Nicolas, Laurent, 92130 Issy Les Moulineaux (FR); ROSTAING, Laurent, 92130 Issy Les Moulineaux (FR); BERGER, Thibault, 92130 Issy Les Moulineaux (FR)
(74) Mandataire: Regimbeau

(57) **Abrégé**

La présente invention concerne un procédé de traitement (100) d'une image acquise (IA) montrant un document structuré à caractère personnel (D) comprenant une zone d'inspection visuelle (VIZ), le procédé comprenant des étapes de :
• détermination (102) d'une première chaîne de caractères à partir d'une zone de lecture automatique ou de type code-barres (MRZ) de format prédéterminé, la première chaîne de caractères représentant une information personnalisée propre au titulaire du document (D),
• génération (106) à partir de la première chaîne d'une image intermédiaire (IS) montrant une deuxième chaîne de caractères représentant la même information personnalisée,
• détection (108) dans l'image acquise d'une troisième chaîne de caractères dans la zone d'inspection visuelle (VIZ), représentant la même information personnalisée, la détection (108) comprenant une comparaison globale de l'image intermédiaire (IS) avec l'image acquise,
• localisation (112) dans la zone d'inspection visuelle (VIZ) d'une région d'intérêt contenant la troisième chaîne de caractères.

## Description

### DOMAINE DE L'INVENTION

La présente invention concerne un procédé et un dispositif de traitement d'une image montrant un document structuré à caractère personnel comprenant une zone d'inspection visuelle.

### ETAT DE LA TECHNIQUE

Sont connus des documents structurés à caractère personnel comprenant une zone de lecture automatique (« Machine-Readable Zone » en anglais, abrégé en MRZ) et une zone d'inspection visuelle (« Visual Inspection Zone » en anglais, abrégé en VIZ).

La zone de lecture automatique peut-être typiquement une MRZ, un code barre et/ou une puce. La zone de lecture automatique comprend des informations agencée et codée d' façon prédéterminée et dont au moins une partie sont des informations personnelles, destinées à être lues et interprétées automatiquement par un système d'analyse de lecture automatique tel qu'un système d'analyse d'image ou tel qu'un lecteur de puce.

Par opposition, une zone d'inspection visuelle VIZ comprend des informations non-codées, susceptibles d'être inspectées à l'oeil nu par toute personne dont au moins une partie sont des informations standardisées et identiques pour tous documents du même type (tel que des labels de champs).

On trouve par exemple ces deux zones dans certains passeports, qualifiés de « passeports lisibles automatiquement » (« Machine-Readable Passport » en anglais). La zone de lecture automatique MRZ de tels passeports contient des informations personnelles du détenteur légitime du passeport (son nom, sa date de naissance, etc.) codées dans un format prédéterminé. La vérification du contenu de la zone de lecture automatique MRZ par un système d'analyse d'image configuré pour décoder le format prédéterminé est beaucoup plus rapide qu'une vérification du contenu de la zone d'inspection visuelle du passeport par un être humain.

Toutefois, le format prédéterminé d'une zone de lecture automatique MRZ est soumis à des contraintes notamment de taille, si bien que certaines informations, apparaissant de manière complète dans la zone d'inspection visuelle, peuvent être absentes dans la MRZ ou n'y apparaître que de manière incomplète.

Aussi, certains systèmes d'analyse d'image ne se bornent pas à analyser le contenu personnalisé de la zone de lecture automatique (MRZ, codes barre, puces etc..), mais analysent également le contenu de la zone d'inspection visuelle VIZ dont une partie du contenu est spécifique et redondant pour un même type de document.

Or, analyser le contenu d'une zone d'inspection visuelle VIZ est un traitement complexe. Un système opérant une telle analyse doit en effet non seulement être capable de localiser des caractères dans cette zone d'inspection visuelle VIZ, mais également être capable de comprendre leur signification pour les exploiter utilement dans des traitements ultérieurs. Par exemple, la chaîne de caractères « MARTIN » peut aussi bien désigner un prénom qu'un nom de famille.

Le document "Vérification of the Document Components from Dual Extraction of MRTD Information", par Young-Bin Kwon et al., propose de mettre en oeuvre une reconnaissance de caractères (OCR) d'une part dans une MRZ et d'autre part dans une zone d'inspection visuelle d'un passeport en s'appuyant sur la connaissance de sa structure et la standardisation de la localisation des caractères, puis de comparer les deux chaînes de caractères obtenues à l'issue de ces deux reconnaissances de caractères. Toutefois, ces étapes de reconnaissance de caractères peuvent générer des erreurs et manquer de précision, par exemple dans le cas d'une image de qualité réduite, présentant des contrastes faibles ou de la perspective, ou dans le cas où le document n'est pas parfaitement perpendiculaire à l'axe optique de l'objectif du dispositif optique utilisé.

Par ailleurs, des procédés comprenant une comparaison d'une image acquise montrant un document structuré avec une image de référence d'un modèle associé au document structuré sont connus.

La comparaison entre l'image acquise et une image de référence montrant un tel modèle est par exemple mise en oeuvre par un dispositif de traitement d'image à des fins d'authentification du document structuré.

L'image de référence doit être préalablement mémorisée dans une base de données à laquelle le dispositif de traitement d'image doit avoir accès.

Le modèle contient des régions d'intérêt prédéterminées contenant des informations génériques, au sens où ces informations se retrouvent sur tout échantillon de document structuré d'un type donné.

Toutefois, un tel modèle ne contient pas toujours des régions suffisamment riches en information permettant de réaliser une authentification correcte.

De plus, si aucune image de référence montrant un modèle associé à un document structuré n'est disponible dans la base de données, aucune comparaison ne peut être mise en oeuvre. Et même s'il était mémorisé dans la base de données un très grand nombre d'images de référence différentes, de sorte à couvrir une grande variété de types de documents structurés, rien ne garantit que cette base de données soit exhaustive.

### EXPOSE DE L'INVENTION

Un but de l'invention est d'analyser le contenu d'une zone d'inspection visuelle d'un document structuré à caractère personnel d'une manière automatique, simple, avantageuse en termes de charge de calcul tout en renforçant la fiabilité de l'analyse.

Un autre but de l'invention est d'analyser le contenu d'une zone d'inspection visuelle d'un document structuré à caractère personnel quelle que soit la structure de ce dernier et sans informations préalables quant à cette structure.

Un autre but de l'invention est d'authentifier un document structuré à caractère personnel au moyen d'un dispositif n'ayant pas à sa disposition d'images de référence susceptible de servir de modèle pour ce document structuré.

Il est dès lors proposé, selon un premier aspect de l'invention, un procédé de traitement d'une image acquise montrant un document structuré à caractère personnel appartenant à un titulaire, le document structuré à caractère personnel comprenant une zone d'inspection visuelle, le procédé comprenant des étapes de :
- détermination d'une première chaîne de caractères à partir d'une zone de lecture automatique ou de type code-barres ayant un format prédéterminé et étant différente de la zone d'inspection visuelle, la première chaîne de caractères représentant au moins une portion d'une information personnalisée propre au titulaire du document structuré,
- génération, à partir de la première chaîne de caractères déterminée, d'une image intermédiaire montrant une deuxième chaîne de caractères représentant la même portion d'information personnalisée,
- détection dans l'image acquise d'une troisième chaîne de caractères contenue dans la zone d'inspection visuelle, la troisième chaîne de caractères représentant au moins une portion de la même information personnalisée, la détection comprenant une comparaison globale de l'image intermédiaire avec une portion de l'image acquise dans la zone d'inspection visuelle,
- localisation dans la zone d'inspection visuelle d'une région d'intérêt de l'image acquise contenant la troisième chaîne de caractères.

La zone de lecture automatique ou de type code-barres a un format prédéterminé. Par conséquent, il est facile de prendre connaissance de la signification de la première chaîne de caractères déterminée à partir de cette zone de lecture automatique ou de type code-barres. Par exemple, il est très facile de savoir si la chaîne de caractère « MARTIN » que l'on déterminerait à partir d'une zone de lecture automatique ou de type code-barres désigne un nom ou un prénom. A titre d'exemple non limitatif, dans une zone de lecture automatique dont le format prédéterminé est conforme au document OACI/ICAO 9303 fourni par l'Organisation de l'aviation civile internationale ou bien celui défini dans la norme ISO/CEI 7501-1:2008, des noms et prénoms sont séparés par deux chevrons alors que différents noms ou différents prénoms sont séparés d'un seul chevron.

Au cours de la mise en oeuvre du procédé selon le premier aspect de l'invention, une chaîne de caractère ayant une signification donnée peut être trouvée facilement puisque l'étape de détection se fonde sur la première chaîne de caractères qui a été déterminée à l'avance grâce à la zone de lecture automatique ou de type code-barres. Une telle détection est beaucoup plus simple à mettre en oeuvre qu'une technique se bornant à analyser le contenu de la zone d'inspection visuelle et à en saisir la signification sans information *a priori.* A cet égard, la comparaison globale mise en oeuvre entre l'image intermédiaire générée avec le contenu de la zone d'inspection visuelle montrée dans l'image acquise est un traitement particulièrement simple à mettre en oeuvre.

Par ailleurs, la comparaison d'images entre l'image intermédiaire et la portion de l'image acquise permet d'analyser avec une grande fiabilité des images variées, pouvant présenter de la perspective, des contrastes faibles ou une qualité réduite, notamment par rapport à une comparaison faisant intervenir une reconnaissance des chaînes de caractères.

Un tel traitement peut être réalisé sans aucune connaissance préalable de la structure ou du type du document structuré à caractère personnel.

En définitive, comme la troisième chaîne de caractères détectée dans la zone d'inspection visuelle a la même signification que la première chaîne de caractères, on obtient à l'issue du procédé, une région d'intérêt ayant un contenu dont on peut connaître la signification dans la zone d'inspection visuelle. Ceci peut être exploité utilement dans diverses applications.

Le procédé proposé peut comprendre les caractéristiques optionnelles suivantes, prises seules ou en combinaison lorsque cela est techniquement possible.

La première chaîne de caractères peut être extraite depuis une image d'extraction montrant la zone de lecture automatique ou de type code-barres, de la première chaîne de caractères, la première chaîne de caractères étant contenue dans la zone de lecture automatique ou de type code-barres.

En variante, le document structuré à caractère personnel peut comprendre une puce électronique mémorisant la première chaîne de caractère. Dans ce cas, la détermination de la première chaîne de caractères comprend une extraction, depuis une image d'extraction montrant la zone de lecture automatique ou de type code-barres, de données d'accès à la puce électronique contenues dans la zone de lecture automatique ou de type code-barres, et un accès à la première chaîne de caractères mémorisée dans la puce électronique à l'aide des données d'accès extraites.

La zone de lecture automatique ou de type code-barres peut faire partie du document structuré à caractère personnel que l'on cherche à traiter. Dans ce cas, l'invention tire avantageusement partie d'une redondance d'information dans ce document pour localiser la région d'intérêt de la zone d'inspection visuelle. Ceci simplifie la mise en oeuvre du procédé. Il est néanmoins envisageable dans d'autres variantes de réalisation d'utiliser la zone de lecture automatique ou de type code-barres d'un autre document structuré à caractère personnel appartenant au même titulaire.

En particulier, l'image d'extraction peut être l'image acquise où la détection est mise en oeuvre. Une seule image montrant le document structuré à caractère personnel est alors requise pour localiser la région d'intérêt de la zone d'inspection visuelle. Ceci simplifie grandement la mise en oeuvre du procédé.

Le procédé peut comprendre par ailleurs la détermination d'une police de caractères utilisée dans la zone d'inspection visuelle pour représenter la portion d'information personnalisée ; l'image intermédiaire peut alors être générée de sorte à montrer la deuxième chaîne de caractères dans la police de caractères déterminée. Ceci permet de rendre plus fiable la détection de la troisième chaîne de caractères, et en particulier une détection manquée en raison du fait que la police de caractère utilisée dans la zone d'inspection visuelle du document structuré à caractère personnel que l'on traite est exotique.

En particulier, il est possible de déterminer la police de caractères au moyen des sous-étapes suivantes :
- extraction d'une information à partir de la zone de lecture automatique ou de type code-barres,
- recherche, dans une base de données, d'une police de caractères associée à l'information extraite.

Grâce à ces sous-étapes, le même procédé est avantageusement utilisable pour traiter des documents structurés à caractère personnel de même type mais dans lequel des polices de caractères différentes sont utilisées (par exemple deux documents d'identité délivrés par des Etats différents).

Par ailleurs, le procédé peut comprendre une détermination d'un format d'affichage utilisé dans la zone d'inspection visuelle pour représenter la portion d'information personnalisée ; la génération de l'image intermédiaire peut alors comprendre un transcodage de la première chaîne de caractère vers le format d'affichage déterminé. Ce transcodage est également de nature à rendre plus fiable la détection de certaines informations personnalisées telles que des dates, pour lesquelles plusieurs formats sont possibles.

En outre, la première chaine de caractères peut ne représenter qu'une première portion de l'information personnalisée. Il peut alors être détecté, au voisinage de la troisième chaîne de caractères détectée dans l'image acquise, une chaîne de caractères complémentaire représentant une autre portion de l'information personnalisée. La région d'intérêt de l'image acquise localisée peut alors être étendue à la chaîne de caractères complémentaire. Cette détection complémentaire permet avantageusement de remonter à une information complète particulièrement longue qui ne pourrait pas figurer en totalité dans une zone de lecture automatique (c'est le cas par exemple des prénoms multiples ou des noms de familles particulièrement longs).

Le procédé peut également comprendre des étapes de :
- détection, sur la base du format prédéterminé de la zone de lecture automatique ou de type code-barres, de la signification de l'information personnalisée,
- sélection, dans une base d'images de référence montrant des modèles de documents structurés, d'une image de référence en fonction de la signification de l'information personnalisée et en fonction de l'emplacement et/ou des dimensions de la région d'intérêt localisée.

Le procédé peut également comprendre une création ou une mise à jour d'une image de référence montrant un modèle associé au document structuré à caractère personnel, la création ou mise à jour comprenant une inclusion de la région d'intérêt de l'image acquise dans l'image de référence.

Le procédé peut également comprendre l'application d'un algorithme de suivi vidéo borné à la région d'intérêt localisée dans l'image acquise, de sorte à suivre sélectivement le contenu de la région d'intérêt dans une séquence vidéo comprenant l'image acquise.

Le procédé peut également comprendre une authentification du document structuré à caractère personnel en fonction du contenu de la région d'intérêt localisée.

Le procédé peut également comprendre la mise en oeuvre d'une reconnaissance de caractères dans la région d'intérêt localisée.

Le procédé peut également comprendre :
- une répétition de l'étape de génération à partir de la première chaîne de caractères déterminée, de sorte à obtenir plusieurs images intermédiaires montrant la deuxième chaîne de caractères représentant la même portion d'information personnalisée mais sous des représentations prédéterminées différentes,
- une répétition des étapes de détection et de localisation pour chaque image intermédiaire générée,
- pour chaque image intermédiaire, une estimation d'un indice de correspondance entre l'image intermédiaire et la région d'intérêt localisée,
- une sélection de l'image intermédiaire pour laquelle il a été estimé un indice de correspondance maximal parmi les indice de correspondances estimés,
- une mise en oeuvre de l'étape de reconnaissance de caractères sélectivement dans la région d'intérêt localisée sur la base de l'image intermédiaire sélectionnée.

Il est également proposé, selon un deuxième aspect de l'invention, un produit programme d'ordinateur comprenant des instructions de code pour l'exécution du procédé de traitement selon le premier aspect de l'invention, lorsque ce programme est exécuté par au moins un processeur.

Il est en outre proposé, selon un troisième aspect de l'invention, un dispositif de traitement d'une image acquise montrant un document structuré à caractère personnel appartenant à un titulaire, le dispositif comprenant :
- des moyens de détermination d'une première chaîne de caractères à partir d'une zone de lecture automatique ou de type code-barres ayant un format prédéterminé et étant différente de la zone d'inspection visuelle, la première chaîne de caractères représentant au moins une portion d'une information personnalisée propre au titulaire du document structuré,
- au moins un processeur configuré pour :
   ∘ générer, à partir de la première chaîne de caractères déterminée, une image intermédiaire montrant une deuxième chaîne de caractères représentant la même information personnalisée que la première chaîne de caractères,
   ∘ détecter dans l'image acquise une troisième chaîne de caractères contenue dans la zone d'inspection visuelle, la troisième chaîne de caractères représentant au moins une portion de la même information personnalisée, la détection comprenant une comparaison globale de l'image intermédiaire avec une portion de l'image acquise dans la zone d'inspection visuelle,
   ∘ localiser dans la zone d'inspection visuelle une région d'intérêt de l'image acquise contenant la troisième chaîne de caractères.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente un système d'analyse d'un document structuré, selon un mode de réalisation de l'invention.
- La figure 2 illustre un échantillon de document structuré.
- La figure 3 est un organigramme d'étapes d'un procédé de traitement d'image, selon un mode de réalisation de l'invention.
- La figure 4 illustre une image de synthèse générée au cours du procédé de traitement dont l'organigramme est illustré en figure 3.
- Les figures 5 à 10 illustrent chacune côte à côte une image acquise montrant le document structuré représenté en figure 2 et différentes portions de l'image de synthèse de la figure 5, ainsi que des mises en correspondances de caractères apparaissant dans ces deux images.
- La figure 11 représente un échantillon de document d'identité ne comportant pas de zone de lecture automatique.

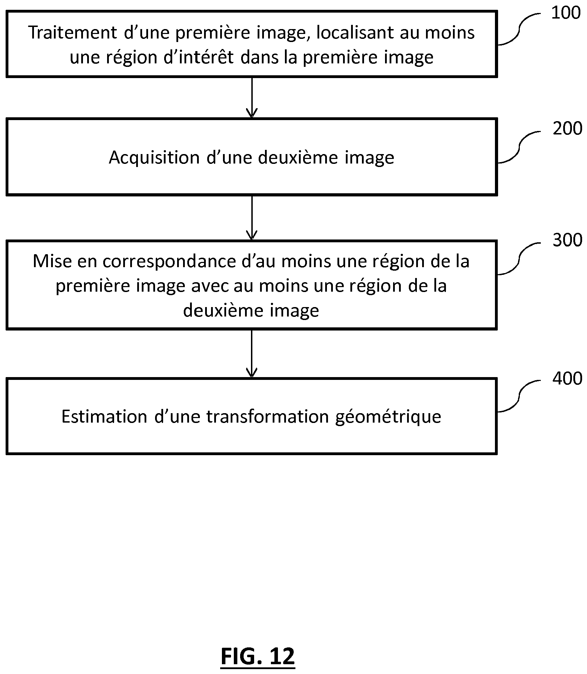

- La figure 12 est un organigramme d'étapes d'un procédé de suivi d'un document structuré dans une séquence vidéo, selon un mode de réalisation de l'invention.
Sur l'ensemble des figures, les éléments similaires portent des références identiques.

### DESCRIPTION DETAILLEE DE L'INVENTION

### A/ Système d'analyse d'image

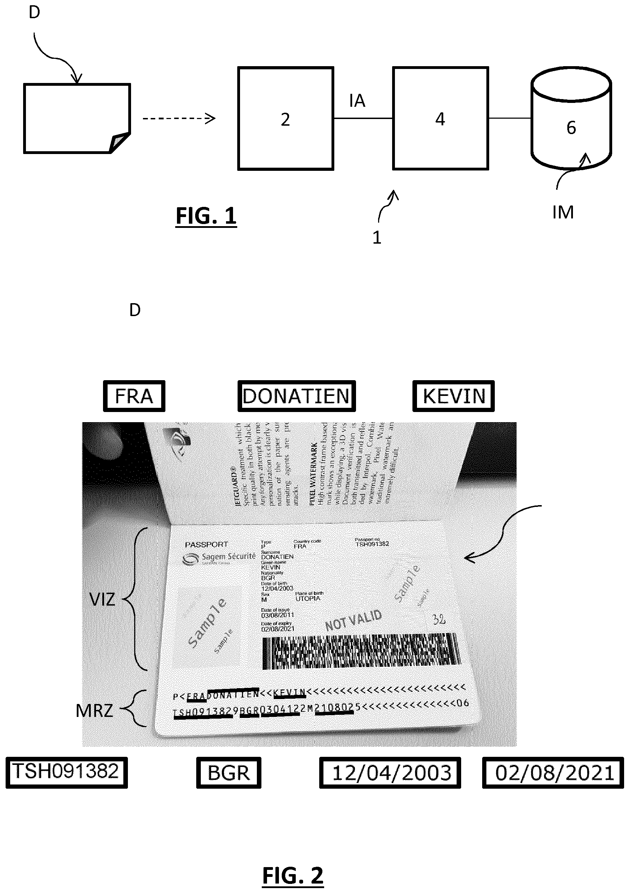

En référence à la **figure 1****,** un système d'analyse d'image 1 comprend un dispositif d'acquisition d'image 2 et un dispositif de traitement d'image 4.

Le dispositif d'acquisition d'image 2 est par exemple une caméra ou un appareil photo.

Le dispositif de traitement d'image 4 est adapté pour traiter des images IA acquises par le dispositif d'acquisition d'image. Il comprend à cet effet au moins un processeur adapté pour exécuter des algorithmes de détection de contenu prédéterminé dans des images.

Le système d'analyse comprend par ailleurs une mémoire 6. La mémoire 6 est par exemple incluse dans le dispositif de traitement d'image 4. Alternativement la mémoire 6 est hébergée par un serveur distant avec lequel le dispositif de traitement d'image 4 est apte à communiquer via un réseau.

Dans la mémoire 6, sont stockées des informations permettant de décoder une zone de lecture automatique MRZ ayant un format prédéterminé. Dans le présent texte, une « zone de lecture automatique » MRZ est à interpréter comme une zone, sur un document officiel, réservée à la lecture, à l'identification et à la validation de ce document.

Sont en particulier mémorisées dans la mémoire 6 des informations susceptibles d'être contenues dans une zone de lecture automatique MRZ.

Le format prédéterminé de la MRZ est le format défini par l'Organisation de l'aviation civile internationale. Ce format est par exemple spécifié dans le document OACI/ICAO 9303 fourni par cette organisation, ou bien celui défini dans la norme ISO/CEI 7501-1:2008.

Facultativement, la mémoire 6 stocke également au moins une image de référence IM montrant un modèle de document structuré. Le modèle contient des régions d'intérêt prédéterminées contenant des informations génériques, au sens où ces informations se retrouvent sur tout échantillon de document structuré d'un type donné. Par exemple, si le document structuré est un passeport français, un modèle relatif à un tel document structuré mémorisé dans la mémoire 6 peut comprendre une région d'intérêt contenant la chaîne de caractères « prénom : ». Dans un échantillon de passeport, on trouvera accolé à une telle région d'intérêt une autre région contenant le prénom du détenteur du passeport. Cette autre région est personnalisée, au sens où son contenu est variable d'un passeport à l'autre ; le contenu d'une région personnalisée n'est donc pas référencé dans l'image de référence IM.

Néanmoins, il peut être prévu que soit prédéterminé dans une image de référence IM une région d'intérêt vide de tout caractères, mais dont on sait qu'elle est en pratique destinée à contenir du contenu personnalisé dans un document structuré.

Par ailleurs, le système d'analyse d'image 1 peut comprendre un module de communication avec une puce électronique intégrée à un document structuré à caractère personnel. On trouve par exemple de telles puces électroniques dans des passeports de génération récente dits « passeports biométriques ». Un tel module de communication est connu de l'état de la technique. Le module de communication est par un exemple un lecteur de communication en champ proche (« Near Field Communication » abrégé en NFC).

Le système d'analyse 1 est par exemple un système d'authentification de document structuré.

### B/ Exemple de document structuré à caractère personnel

Dans le présent texte, on considère que qu'un « document structuré à caractère personnel » désigne un document appartenant à un titulaire unique et comprenant un ensemble de données organisées en catégorie d'information (label de champ) et des entrées personnalisées : par exemple, il peut s'agir d'une pièce d'identité servant à prouver l'état civil de son titulaire (carte d'identité, permis de conduire, passeport, etc.) ou bien un document administratif servant à prouver que son titulaire possède certains droits (carte d'assurance maladie, carte de fidélité, etc.).

On a illustré schématiquement en **figure 2** un échantillon de document structuré D. Ce document structuré est un passeport de démonstration.

Le document structuré D comprend, sur au moins une de ses deux faces, une partie inférieure contenant une zone de lecture automatique MRZ, et une partie supérieure contenant une zone d'inspection visuelle VIZ, dont le contenu est non-codé, et donc interprétable par toute personne.

La zone de lecture automatique MRZ comprend une pluralité de caractères sur fond uni. Ces caractères sont imprimés au moyen d'une première police de caractères.

La pluralité de caractères de la MRZ comprend par exemple les chaînes de caractères suivantes :
- « P », qui est un type indiquant que le document structuré D est un passeport,
- « FRA », qui est un code géographique indiquant que le document D concerne le territoire français,
- « DONATIEN », représentant le nom de famille du titulaire du document structuré D,
- « KEVIN », représentant un premier prénom du titulaire du document structuré D,
- « TSH091382 » représentant un identifiant unique associé au document structuré D ;
- « BGR » représentant une nationalité du titulaire ;
- « 030412 » représentant une date de naissance du titulaire du document D (le 12/04/ 2003)
- « 210802 » représentant une date d'expiration du document D (le 02/08/2021).

La zone de lecture automatiques contient également des caractères séparateurs (par exemple le caractère « < » pour séparer le type du code géographique).

La zone d'inspection visuelle VIZ peut comprendre une photo du titulaire légitime du document structuré D, et une pluralité de paires de zones d'intérêt. Chaque paire est constituée d'une région de contenu générique et d'une région de contenu personnalisé, c'est-à-dire propre au document structuré (ici propre au titulaire du passeport).
- Une première paire de régions d'intérêt est relative à l'identifiant unique du document D, constituée :
   ∘ d'une région générique comprenant la chaîne de caractères « PASSPORT NO/PASSEPORT N° »
   ∘ d'une région personnalisée comprenant une chaîne de chiffres représentant l'identifiant unique du document D.
- Une deuxième paire de régions d'intérêt est relative au nom de famille du titulaire du document structuré D, constituée
   ∘ d'une région générique comprenant la chaîne de caractères « SURNAME/NOM »
   ∘ d'une région personnalisée comprenant une chaîne de caractères représentant le nom de famille du titulaire du document D.
- Une troisième paire de régions d'intérêt est relative au(x) prénom(s) du titulaire du document structuré D, constituée :
   ∘ d'une région générique comprenant la chaîne de caractères « GIVEN NAMES/PRENOMS »
   ∘ d'une région personnalisée comprenant une chaîne de caractères à un ou plusieurs mots, représentant le ou les prénoms du titulaire,
- Une quatrième paire de régions d'intérêt est relative au type du document structuré D, constituée :
   ∘ d'une région générique comprenant la chaîne de caractères « TYPE/TYPE »
   ∘ d'une région personnalisée comprenant une chaîne de caractères représentant le type du document D.
- Une cinquième paire de régions d'intérêt est relative à un code géographique associé au document structuré D, constituée :
   ∘ d'une région générique comprenant la chaîne de caractères « CODE/CODE »
   ∘ d'une région personnalisée comprenant une chaîne de caractères représentant le code géographique du document D.
- Une sixième paire de régions d'intérêt est relative à une date de naissance du titulaire, constituée :
   ∘ d'une région générique comprenant par exemple la chaîne de caractères « date de naissance », et
   ∘ D'une région personnalisée comprenant une chaîne de caractères représentant la date de naissance du titulaire (par exemple au format « jour/mois/année »)
- etc.

Les caractères contenus dans la zone d'inspection visuelle VIZ sont imprimés au moyen d'au moins une deuxième police de caractères, qui n'est pas forcément la même que la première police de caractères utilisée pour la MRZ. Dans le passeport de la figure 2, ces deux polices sont par exemple différentes.

### C/ Procédé de traitement d'image

On suppose qu'une première image IA montrant le document D représenté en figure 2 a été préalablement acquise par le dispositif d'acquisition d'image 2.

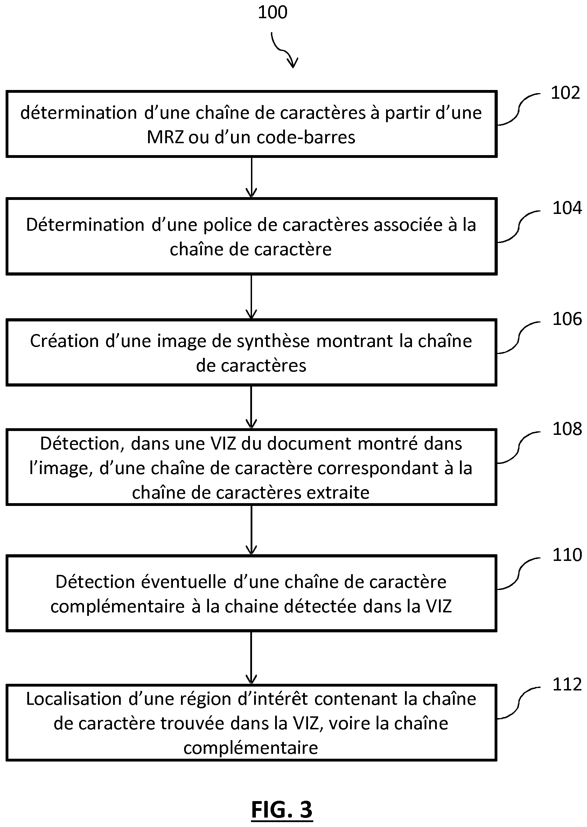

En référence à la figure 3, un procédé 100 d'analyse de cette image IA comprend les étapes suivantes.

Le dispositif de traitement d'image 4 localise dans la première image IA la zone de lecture automatique MRZ. Pour mettre en oeuvre cette étape, le dispositif de traitement d'image 4 peut par exemple tirer parti du fait que la première police de caractères soit prédéterminée. Dans ce cas, le dispositif de traitement d'image 4 met en oeuvre une reconnaissance de caractères utilisant cette première police prédéterminée dans l'image.

Le dispositif de traitement d'image détermine ensuite une première chaîne de caractères à partir de la zone de lecture automatique (étape 102).

La première chaîne de caractères peut être directement contenue dans la zone de lecture automatique. Cette étape 102 de détermination comprend alors une extraction de la première chaîne de caractères contenue directement dans la zone de lecture automatique MRZ.

En variante, la première chaîne de caractère peut n'être pas directement présente dans la zone de lecture automatique MRZ, mais être stockée dans une mémoire d'une puce électronique intégrée au document structuré D, la MRZ servant simplement à accéder à cette chaîne de caractères stockée dans la puce. Dans une telle variante, l'étape 102 de détermination peut comprendre les étapes suivantes :
- extraction dans l'image acquise de données d'accès à la mémoire de la puce qui sont contenues dans la zone de lecture automatique,
- établissement d'un canal de communication sécurisé entre la puce un module de communication du un système d'analyse d'image 1 adapté à cet effet, à l'aide des données d'accès extraites,
- téléchargement de la première chaîne de caractère stockée dans la mémoire de la puce vers le module de communication puis transmission de cette chaîne de caractères au dispositif de traitement d'image 4.

Par exemple, les données d'accès à la puce sont constituées de 21 caractères dans une MRZ en comptant au total 88 : 9 caractères représentant un numéro du document D, 6 caractères représentant la date de naissance du titulaire et 6 caractères représentant la date d'expiration du document.

La première chaîne de caractères représente au moins une portion d'une information personnalisée propre au titulaire du document structuré D à caractère personnel, au sens où cette information est variable d'un échantillon à l'autre du même type de document structuré puisque ces échantillons appartiennent à des titulaires différents. Cette information personnalisée peut être par exemple une information d'état civil du titulaire du document D, telle qu'un nom ou un prénom, ou bien un identifiant unique du document structuré (numéro du document par exemple).

La première chaine de caractère détecté à partir de la MRZ est « P ». Le format prédéterminé de la MRZ permet au dispositif de traitement d'image 4 de déterminer cette lettre désigne le type du document structuré. Le dispositif de traitement 4 utilise notamment le fait que la première chaîne de caractères (ici constituée d'un seul caractère) est immédiatement suivie du caractère séparateur prédéterminé (par exemple « < »), que cette première chaîne se trouve tout au début de la MRZ (première ligne, tout à gauche) pour en déduire qu'elle représente bien d'un type du document structuré.

Le dispositif de traitement d'image 4 recherche ensuite dans la première image IA une deuxième chaîne de caractères représentant la même information personnalisée propre au document structuré D que celle de la première chaîne de caractères (étape 108).

Le dispositif de traitement d'image 4 peut par exemple rechercher une deuxième chaîne de caractères comprenant les mêmes caractères que la première chaîne de caractères, ou tout du moins des caractères correspondants (étape 108).

Dans le présent texte, on considère que :
- deux caractères représentant la même lettre accentuée différemment sont correspondants (par exemple « é » et « è » sont correspondants),
- un caractère représentant une lettre accentuée et un caractère représentant la même lettre non accentuée sont également correspondants (par exemple « é » et « e »),
- deux caractères représentant la même lettre selon deux casses différentes (minuscule, majuscule, capitale) sont également correspondants,
- un caractère représentant un signe dans une première police de caractères et un caractère représentant le même signe dans une deuxième police de caractères différente de la première police de caractères sont également correspondants.

De façon plus générale, il se peut que le format prédéfini de la MRZ impose l'utilisation d'un ensemble de signes restreint au cours de son impression sur le document structuré D. Par exemple, la MRZ de la carte illustrée en figure 2 ne peut pas comprendre de caractère accentué. En outre, la MRZ n'utilise que des lettres capitales. Aussi, au cours de la recherche, il est pris soin de rechercher non seulement une chaîne comprenant les mêmes caractères mais également leurs variantes accentuées, et leurs variantes en minuscules le cas échéant.

La recherche 108 est mise en oeuvre dans la zone d'inspection visuelle VIZ du document structuré D, qui est différente de la zone de lecture automatique MRZ.

Pour faciliter cette recherche 108 lorsque la première police utilisée pour la MRZ est différente de la deuxième police, utilisée pour la zone d'inspection visuelle VIZ, le dispositif de traitement d'image 4 détermine quelle est cette deuxième police de caractères (étape 104).

Cette détermination 104 de la deuxième police de caractères comprend typiquement l'extraction d'un code géographique contenu la zone de lecture automatique MRZ, et la recherche, dans une base de données, d'une police de caractères associée à l'information de territoire. Dans l'exemple de la figure 2, le code géographique est « FRA » ; il est donc recherche une police associée au territoire français.

Une fois déterminée la deuxième police de caractères au cours de l'étape 104, le dispositif de traitement d'image 4 génère une image de synthèse IS montrant la première chaîne de caractère, mais cette fois imprimée au moyen de la deuxième police de caractères déterminée, et non celle montrée dans l'image de départ IA.

Tous ou une partie des caractères de la MRZ sont imprimés dans l'image de synthèse IS au moyen de la deuxième police de caractères. Par exemple, certains caractères spéciaux, non relatifs à une information personnalisée, ne sont pas imprimés dans l'image de synthèse. C'est le cas par exemple du caractères « < » qui a simplement une fonction de séparateur d'informations dans la MRZ.

Ensuite, au cours de la recherche 108, le dispositif de traitement d'image 4 compare l'image de synthèse avec un portion de l'image acquise IA au niveau de la VIZ.

Cette comparaison peut comprendre des mises en correspondances entre des points d'intérêt de l'image de synthèse IS générée avec des points d'intérêt présents dans l'image acquise, dans la zone d'inspection visuelle VIZ. Cette mise en correspondance est notamment facilitée par le fait que les polices de caractères utilisées dans la VIZ et dans l'image de synthèse IS sont les mêmes. Plutôt que de mettre en correspondance des caractères (ce qui suppose de les avoir détectés et segmentés, par exemple au moyen d'une technique de type OCR), il peut être envisagé de mettre en correspondance des points d'intérêts de l'image de synthèse IS et des points d'intérêt dans la zone d'inspection visuelle VIZ.

En variante, la comparaison utilisée au cours de l'étape 108 utilise une technique de « template matching », par exemple celle proposé à l'adresse suivante http://www.lps.usp.br/hae/software/cirateg/index.html pour localiser les champs personnalisés recherchés dans la VIZ.

Est ainsi trouvée la chaîne de caractères « P » dans la zone d'inspection visuelle VIZ de la carte représentée en figure 2, identique à la chaîne de caractères « P » initialement trouvée dans la MRZ.

Le dispositif de traitement d'image 4 localise une région d'intérêt de l'image acquise contenant la deuxième chaîne de caractères (étape 112). Cette région d'intérêt ne contient par exemple que cette deuxième chaîne de caractères à l'exclusion de toute autre chaîne de caractères. Dans le présent texte, on comprend qu'une région d'intérêt de l'image acquise ne constitue d'une portion de cette image.

La région d'intérêt est typiquement une région rectangulaire.

Une reconnaissance de caractères (OCR) peut être mise en oeuvre dans la région d'intérêt localisée afin d'en extraire la chaîne de caractères. De préférence, la reconnaissance de caractères est réalisée en utilisant la connaissance de la police utilisée pour la région d'intérêt de la VIZ, préalablement déterminée par le dispositif de traitement d'image 4, et/ou la connaissance du format d'affichage utilisé dans la région d'intérêt, ce qui permet d'améliorer la fiabilité de la reconnaissance de caractères ainsi mise en oeuvre.

Dans le cas où des polices de caractères et/ou formats d'affichage différents sont utilisés dans la VIZ ou que de telles informations ne sont pas connues a priori, il est possible de générer plusieurs images de synthèse IS. Chaque image de synthèse IS montre la première chaîne de caractères sous une forme spécifique, par exemple imprimée au moyen d'une police de caractères et/ou d'un format d'affichage déterminé comme étant utilisé dans la VIZ ou non. Il est possible de générer autant d'images de synthèse que de polices de caractères de la VIZ, que de formats d'affichages de la VIZ, ou que de couples polices de caractères et formats d'affichage de la VIZ.

Chacune des images de synthèse IS générée est alors comparée avec une portion de l'image acquise au niveau de la VIZ. Un indice de correspondance peut être calculé pour chacune des comparaisons effectuées. Cet indice de correspondance est d'autant plus élevé que la correspondance entre l'image de synthèse IS montrée dans la police de caractères et/ou le format d'affichage donnés, et la portion de l'image acquise, est bonne. L'image de synthèse IS obtenant l'indice de correspondance le plus élevé est sélectionnée pour être océrisée dans la police de caractères et/ou le format d'affichage à laquelle elle correspond.

Les étapes qui précèdent peuvent être répétées pour plusieurs chaînes de caractères différentes extraites de la MRZ.

On a vu précédemment qu'a été extrait de la MRZ une chaîne de caractère représentative d'un code géographique (ici « FRA »). La même chaîne de caractère est trouvée dans la zone d'inspection visuelle VIZ.

Similairement, est détecté dans la MRZ le nom de famille « DONATIEN ». La chaîne de caractères correspondante « DONATIEN » est détectée dans la zone d'inspection visuelle VIZ.

Est également détecté dans la MRZ le prénom « KEVIN ». La chaîne de caractères correspondante « KEVIN » est détectée dans la zone d'inspection visuelle VIZ.

Les étapes qui précèdent sont également répétées pour un identifiant unique du document structuré. Dans le cas du document D, l'identifiant « TSH091382 » est extrait de la MRZ, se trouvant tout à gauche de la deuxième ligne de la MRZ ; le même identifiant est détecté dans la zone d'inspection visuelle VIZ.

Les étapes qui précèdent peuvent également être répétées pour une date de naissance et un lieu de naissance du titulaire du document D, ainsi qu'une date d'expiration du document D.

Dans le cas de la date de naissance, il se peut qu'une chaîne de caractère ayant une certaine signification dans la zone de lecture automatique MRZ et la chaîne de caractère ayant la même signification dans la zone d'inspection visuelle VIZ soit de formats différents. On peut par exemple trouver dans la MRZ la chaîne de caractères « 870312 » et dans la VIZ la chaîne de caractère correspondante « 13/03/1987 » qui sont toutes les deux représentatives d'une date de naissance au 12 mars 1987.

Lorsque ces deux formats sont différents, la chaîne de caractères trouvée dans la MRZ est transcodée dans le même format que celui utilisé dans la zone d'inspection visuelle avant la mise en oeuvre de l'étape 112.

Lorsque les étapes du procédé 100 sont répétées pour plusieurs chaînes de caractères détectées dans la MRZ, plusieurs régions d'intérêt disjointes sont localisées dans l'image acquise IA.

Dans l'exemple illustré en figure 2, la MRZ ne contient pas d'information tronquée. En particulier, le prénom « KEVIN » et le nom « DONATIEN » sont suffisamment courts pour tenir intégralement dans la MRZ.

Toutefois, il se peut que certaines informations, présentes intégralement dans la zone d'inspection visuelle VIZ, ne soient présentes dans la MRZ que sous une forme tronquée.

Imaginons par exemple que le titulaire du passeport de la figure 2 ait comme deuxième prénom « ALEXANDRE », que ce deuxième prénom soit imprimé intégralement dans la zone d'inspection visuelle VIZ à droite du premier prénom « KEVIN », mais que ce deuxième prénom ne soit pas du tout présent dans la MRZ faute de place suffisante. Si l'on se borne à mettre en oeuvre les étapes qui précèdent, les caractères « Alexandra » présents dans la zone d'inspection visuelle VIZ ne seront pas inclus dans une région d'intérêt localisée. Pourtant, une telle inclusion serait avantageuse car enrichirait la région d'intérêt en termes de quantité d'information personnalisée. On verra dans la suite que les différentes utilisations qui peuvent être faites des régions d'intérêt localisées au cours de l'étape 112 tirent des avantages de cet enrichissement en information.

Pour cela, le dispositif de traitement d'image 4 peut rechercher (étape 110) la présence éventuelle d'une chaîne de caractères complémentaire, dans un voisinage d'une chaîne de caractères trouvée dans la zone d'inspection visuelle VIZ au cours de l'étape 108. Le voisinage considéré est par exemple une région adjacente à la chaîne de caractères détectée, située en aval de celle-ci par référence à un sens de lecture de la chaîne de caractères. Ainsi, lorsque l'alphabet latin est utilisé, le sens lecture est de la gauche vers la droite ; « aval » s'entent alors comme situé à droite de la chaîne de caractères détectée.

Dans une première variante de l'étape 110, la recherche se borne à rechercher des lettres complémentaires d'un mot dont la chaîne initialement trouvée dans la zone d'inspection visuelle VIZ fait partie. Autrement dit, elle s'arrête dès que la fin d'un mot est détectée (par exemple en détectant un caractère d'espacement).

Dans une deuxième variante de l'étape 110, la recherche s'étend jusqu'au bord du document structuré localisé en aval de la chaîne trouvée au cours de l'étape de détection 108. Dans ce cas, la chaîne de caractères complémentaire « ALEXANDRE » est trouvée.

Lorsqu'une chaîne de caractères complémentaire a été trouvée au cours de l'étape 110, la région d'intérêt localisée au cours de l'étape 112 une portion de l'image acquise contient non seulement la chaîne trouvée au cours de l'étape de détection 108 mais également la chaîne de caractères complémentaire correspondante. Ainsi, dans notre exemple évoqué précédemment, une région d'intérêt peut comprendre « KEVIN, ALEXANDRE », et non seulement « KEVIN ».

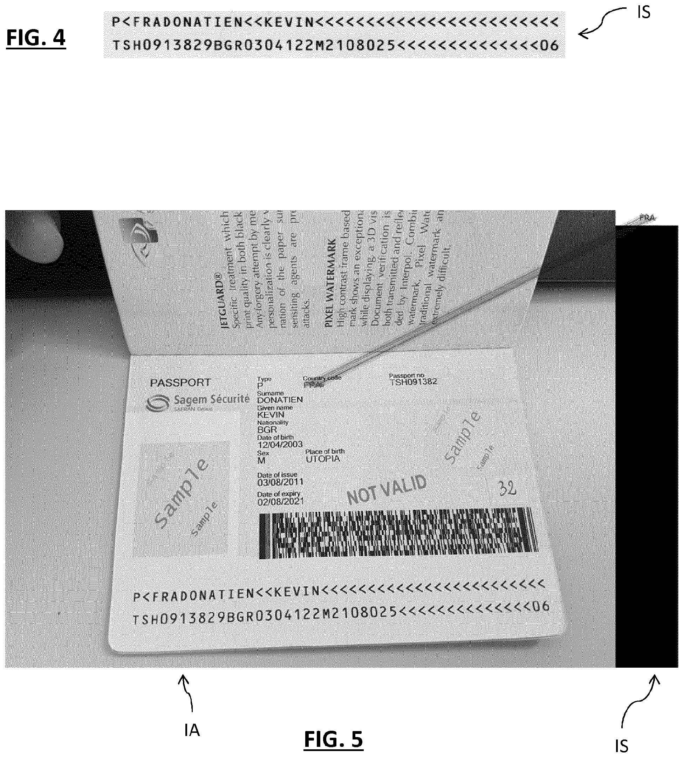

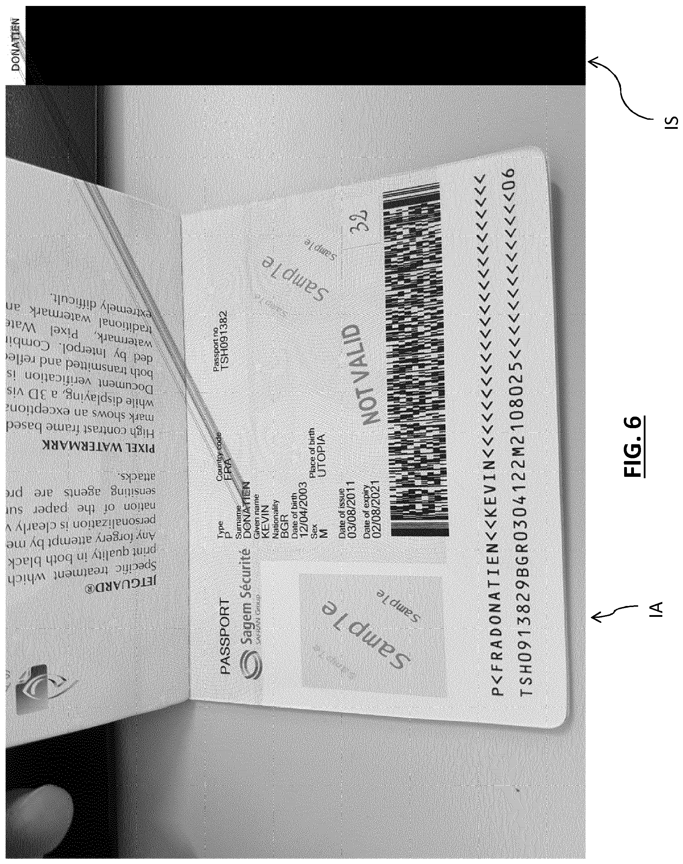

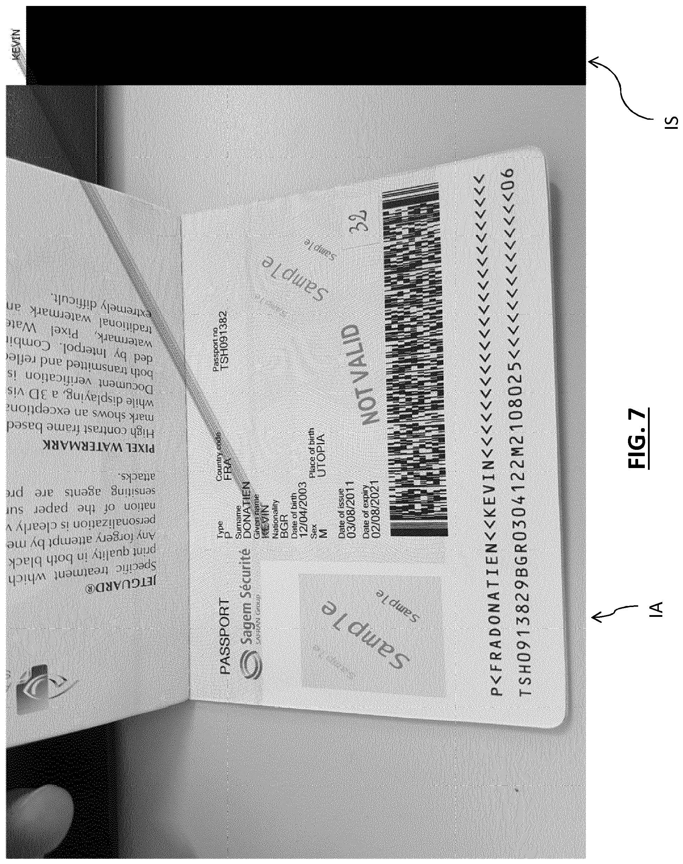

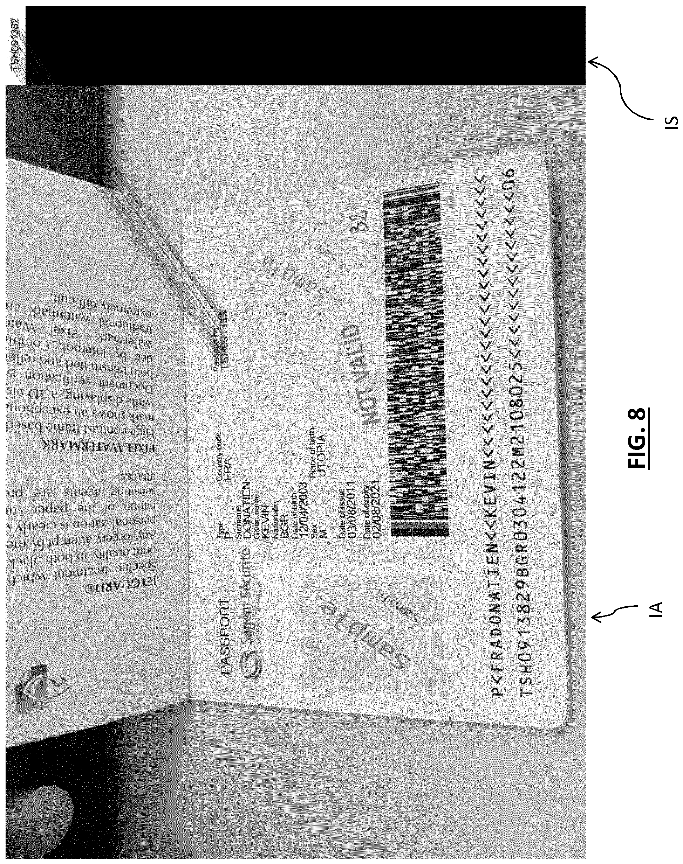

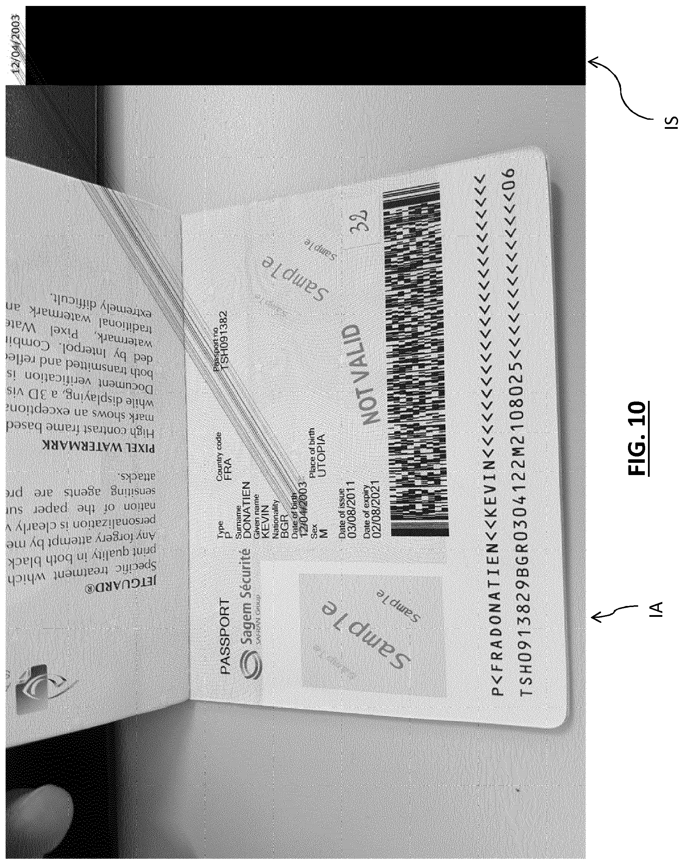

Les figures **5** à **10** montrent les mises en correspondances réalisées par le dispositif de traitement d'image entre les images IA et IS, respectivement pour des chaînes de caractères représentatives des informations suivantes : code géographique, nom de famille, prénom, identifiant unique de document, nationalité, date de naissance.

A l'issue de la mise en oeuvre du procédé 100, une ou plusieurs régions d'intérêt ont été localisés dans l'image acquises, ces régions d'intérêts peuvent être disjointes.

La ou chaque région d'intérêt peut être utilisée de diverses manières.

### D/ Création ou mise à jour d'une image de référence montrant un modèle de document structuré

La ou chaque région d'intérêt localisée peut servir à enrichir ou créer de toutes pièces une image de référence montrant un modèle de document structuré.

Une telle image de référence sert typiquement à être comparée avec au moins une image acquise de document structuré, à des fins d'authentification.

Le dispositif de traitement d'image 4 inclut chaque région d'intérêt localisée dans une image de référence IM destinée à servir de modèle pour le document structuré. Par inclusion on entend une copie de pixels de l'image IA dans une image de référence IM.

Dans une première variante, le dispositif de traitement crée une nouvelle image de référence IM incluant les pixels de chaque région d'intérêt localisée dans l'image IA.

Dans une deuxième variante, le dispositif inclut chaque région d'intérêt dans une image de référence IM préexistante dans la mémoire 6 ; cette image de référence IM est alors enrichie avec l'information additionnelle contenue dans cette portion d'image.

L'image de référence IM (créée ou mise à jour) est mémorisée dans la mémoire 6.

Cette image de référence IM comprend non seulement des régions d'intérêt génériques mais également des régions d'intérêt personnalisées de la zone d'inspection visuelles, contenant par exemple l'identifiant unique du document D, le code géographique du document D, le nom de famille du titulaire du document D, et son/ses prénom(s).

Sont également mémorisées dans la mémoire 6, des informations de localisation de chaque région d'intérêt dans l'image de référence IM.

### E/ Classification

Il se peut que la mémoire 6 contienne plusieurs images de références préexistantes, montrant des modèles de documents de types différents (passeport, carte d'identité, etc.). Il convient dans ce cas de déterminer, laquelle ou lesquelles de ces images de références doit être enrichie avec les régions d'intérêts qui ont été localisés par le procédé 100.

Pour sélectionner une image de référence pertinente, les étapes suivantes sont mises en oeuvre.

Le dispositif de traitement d'image 4 détecte, sur la base du format prédéterminé de la zone de lecture automatique MRZ, la signification d'une information personnalisée contenue dans une région d'intérêt localisée. Par exemple, comme indiqué précédemment, le dispositif de traitement d'image 4 a déterminé que la première lettre « P » de la MRZ désigne le type du document structuré grâce au fait que cette lettre, et procède de même pour les autres informations consignées dans la MRZ.

On suppose par ailleurs que chacune des images de référence contient une région d'intérêt vide destinée en pratique à contenir une information personnalisée dans un document structuré, la signification de cette information personnalisée étant prédéterminée. Par exemple, sont mémorisées dans la mémoire 6 des données permettant de savoir qu'une petite zone d'intérêt vide de tout caractère de l'image IM, située en dessous de la région générique contenant « TYPE/TYPE », est destinée à héberger, dans un vrai document structuré, une chaîne de caractère désignant le type de ce document structuré.

Si le dispositif de traitement d'image 4 constate que la région d'intérêt personnalisée contenant le caractère « P », localisée dans l'image acquise, a une taille et/ou une position proche d'une région d'intérêt vide d'une image de référence, alors cette image de référence est sélectionnée. Cette image de référence est ensuite enrichie avec le contenu de la région d'intérêt préalablement localisée dans l'image acquise (ici le caractère « P »).

En définitive, le dispositif de traitement d'image sélectionne, parmi les images de référence mémorisées dans la mémoire 4, une image de référence en fonction de la signification de l'information personnalisée et en fonction de l'emplacement et/ou des dimensions de la région d'intérêt localisée.

### F/ Suivi vidéo

Le dispositif de traitement d'image peut par ailleurs utiliser une région d'intérêt à des fins de suivi vidéo.

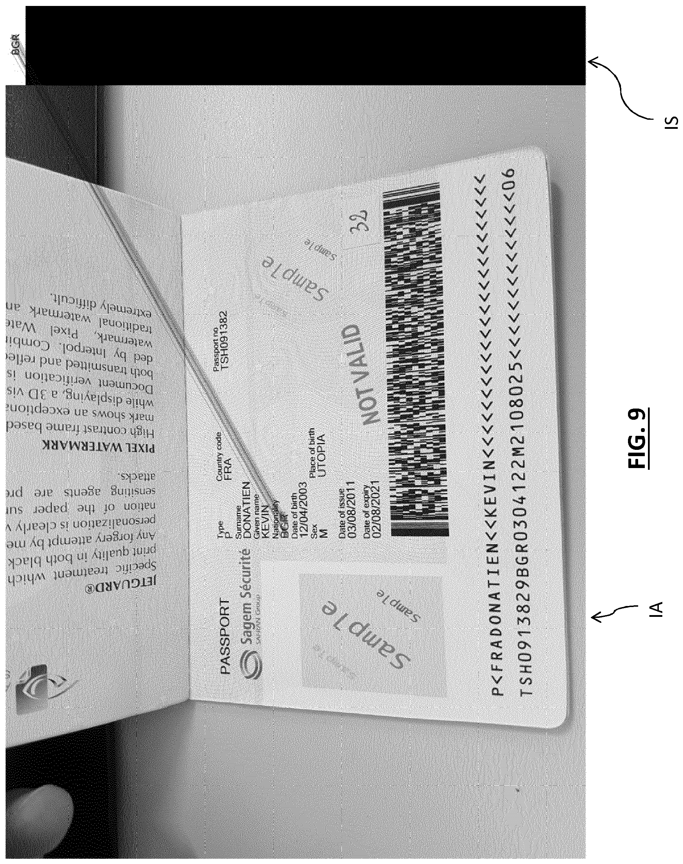

En référence à la **figure 9****,** le dispositif d'acquisition 2 acquiert au moins une deuxième image montrant le document structuré (étape 200). Par exemple, la première image IA acquise et la deuxième image acquise font par exemple partie d'une même séquence vidéo filmée par le dispositif d'acquisition d'image 4.

Le dispositif de traitement d'image met en oeuvre un algorithme de suivi vidéo, cet algorithme étant sélectivement appliqué à la ou chaque région d'intérêt déterminée dans la première image une fois

Le dispositif de traitement d'image 4 met en en correspondance des régions de la première image IA avec des régions de la deuxième image acquise, selon une méthode connue de l'état de la technique (étape 300).

Dans cette application de suivi vidéo, la ou chaque région d'intérêt localisée constitue une source d'information permettant d'augmenter significativement la zone couverte par les mises en correspondances. Toutefois, il est à noter que le suivi vidéo n'est pas appliqué à l'ensemble des pixels des images acquises, mais uniquement limité aux pixels des régions d'intérêt localisées, ce qui offre un bon compromis entre efficacité de suivi vidéo et économie de charge de calcul.

Le dispositif de traitement d'image peut également mettre en correspondance des régions d'une image de référence IM créée ou enrichie sur la base des régions d'intérêt localisées dans l'image IA, avec des régions d'intérêt d'une autre image acquise.

L'image de référence IM créée ou mise à jour au moyen des étapes du procédé 100 permet donc de mettre en oeuvre une mise en correspondance plus précise qu'une image de référence IM classique montrant un modèle générique (c'est-à-dire ne contenant des régions d'intérêt prédéterminées contenant des informations génériques partagées par plusieurs échantillons d'un même type de document structuré), comparativement moins riche en informations.

Le dispositif de traitement d'image 4 peut également estimer une transformation géométrique tenant compte de déformations du document structuré montré dans la deuxième image par rapport au modèle, à partir des correspondances effectuées. Une telle estimation permet de suivre le document structuré même lorsque celui-ci a subi des déformations (pliures, froissements, etc.) (étape 400). L'estimation de cette transformation géométrique peut par exemple être mise en oeuvre au moyen d'une des méthodes citées dans la demande de brevet français dont le numéro de dépôt est 1559476.

Le caractère enrichi de l'image de référence IM utilisée permet de caractériser de façon plus précise de telles déformations, comparativement à une image de référence IM générique.

Ce suivi vidéo (ou plus généralement l'image de référence IM enrichie) peut être utilisé au cours d'un procédé d'authentification de document structuré.

### G/ Autres modes de réalisation

Il a été précédemment décrit des modes de réalisation dans lesquels la zone de lecture automatique MRZ et la zone d'inspection visuelle VIZ sont comprises dans un même document structuré à caractère personnel D, et dans lequel les étapes de détermination d'une première chaîne de caractères à partir de la MRZ et de détection d'une deuxième chaîne de caractères dans la zone d'inspection visuelle VIZ sont conduites dans la même image IA.

En variante, l'étape de détermination 102 est réalisée sur la base d'une image d'extraction différente de l'image IA, l'image d'extraction montrant la MRZ.

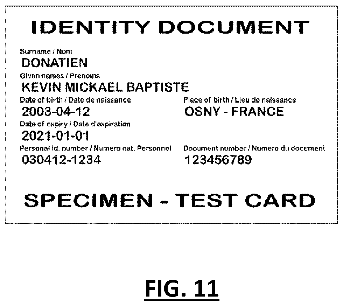

De plus, l'image d'extraction peut montrer le même document structuré à caractère personnel D, ou bien un autre document structuré à caractère personnel appartenant au même titulaire que le document D. Dans ce cas, le document D peut ne pas comprendre de MRZ (la **figure 11** montre un exemple de document structuré à caractère personnel ne présentant pas de MRZ). Par exemple, l'étape de détermination 102 peut être conduite sur la base d'une image d'extraction montrant le document D, qui est un passeport, et l'étape de détection 108 être conduite sur une carte d'assurance maladie appartenant au même titulaire.

Par ailleurs, l'invention reste applicable aux documents comprenant un code-barres plutôt qu'une zone de lecture automatique MRZ dont le format a été définie par l'Organisation de l'aviation civile internationale. Un tel code-barres est par exemple le code-barres 2D-doc proposé en France par l'Agence Nationale des Titres Sécurisés.

L'invention est par exemple applicable à un code-barres d'une carte d'embarquement dont le format est défini par l'Association du transport aérien international (en anglais « International Air Transport Association », ou IATA) dans le document intitulé « Simplifying the Business Bar Coded Boarding Pass Implementation Guide ». En pratique, les traitements conjoints d'une carte d'embarquement et d'un passeport sont très courants lors de voyages en avion. La lecture du code-barres de la carte d'embarquement est plus aisée que la lecture d'un document d'identité : il est donc avantageux d'exploiter le code-barres d'une carte d'embarquement comme source d'information en vue de localiser des régions d'intérêt dans la VIZ du document d'identité.

## Revendications

1. Procédé de traitement (100) d'une image acquise (IA) montrant un document structuré à caractère personnel (D) appartenant à un titulaire, le document structuré à caractère personnel (D) comprenant une zone d'inspection visuelle (VIZ), le procédé comprenant des étapes de :
• détermination (102) d'une première chaîne de caractères à partir d'une zone de lecture automatique ou de type code-barres (MRZ) ayant un format prédéterminé et étant différente de la zone d'inspection visuelle (VIZ), la première chaîne de caractères représentant au moins une portion d'une information personnalisée propre au titulaire du document structuré (D),
• génération (106), à partir de la première chaîne de caractères déterminée, d'une image intermédiaire (IS) montrant une deuxième chaîne de caractères représentant la même portion d'information personnalisée,
• détection (108) dans l'image acquise d'une troisième chaîne de caractères contenue dans la zone d'inspection visuelle (VIZ), la troisième chaîne de caractères représentant au moins une portion de la même information personnalisée, la détection (108) comprenant une comparaison de l'image intermédiaire (IS) avec une portion de l'image acquise dans la zone d'inspection visuelle (VIZ),
• localisation (112) dans la zone d'inspection visuelle (VIZ) d'une région d'intérêt de l'image acquise (IA) contenant la troisième chaîne de caractères.

2. Procédé selon la revendication 1, dans lequel la détermination de la première chaîne de caractères comprend une extraction, depuis une image d'extraction montrant la zone de lecture automatique ou de type code-barres (MRZ), de la première chaîne de caractères, la première chaîne de caractères étant contenue dans la zone de lecture automatique ou de type code-barres (MRZ).

3. Procédé selon la revendication 1, dans lequel :
• le document structuré à caractère personnel (D) comprend une puce électronique mémorisant la première chaîne de caractère,
• la détermination de la première chaîne de caractères comprend une extraction, depuis une image d'extraction montrant la zone de lecture automatique ou de type code-barres (MRZ), de données d'accès à la puce électronique (D) contenues dans la zone de lecture automatique ou de type code-barres (MRZ), et un accès à la première chaîne de caractères mémorisée dans la puce électronique à l'aide des données d'accès extraites.

4. Procédé selon l'une des revendications 2 à 3, dans lequel le document structuré à caractère personnel (D) comprend la zone de lecture automatique ou de type code-barres (MRZ), et dans lequel l'image d'extraction est une image acquise montrant le document structuré à caractère personnel (D).

5. Procédé selon l'une des revendications 2 à 4, dans lequel l'image d'extraction est l'image acquise où la détection (108) est mise en oeuvre.

6. Procédé selon l'une des revendications précédentes, comprenant une détermination (104) d'une police de caractères utilisée dans la zone d'inspection visuelle (VIZ) pour représenter la portion d'information personnalisée, et dans lequel l'image intermédiaire (IS) est générée de sorte à montrer la deuxième chaîne de caractères dans la police de caractères déterminée, dans lequel la détermination (104) de la police de caractères comprend les sous-étapes de :
• extraction d'une information à partir de la zone de lecture automatique ou de type code-barres (MRZ),
• recherche, dans une base de données, d'une police de caractères associée à l'information extraite.

7. Procédé selon l'une des revendications précédentes, comprenant une détermination d'un format d'affichage utilisé dans la zone d'inspection visuelle (VIZ) pour représenter la portion d'information personnalisée, et dans lequel la génération de l'image intermédiaire (IS) comprend un transcodage de la première chaîne de caractère vers le format d'affichage déterminé.

8. Procédé selon l'une des revendications précédentes, dans lequel
• la première chaine de caractères représente une première portion de l'information personnalisée,
• est détectée (110), au voisinage de la troisième chaîne de caractères dans l'image acquise, une chaîne de caractères complémentaire représentant une autre portion de l'information personnalisée,
• la région d'intérêt de l'image acquise (IA) localisée contient en outre la chaîne de caractères complémentaire.

9. Procédé selon l'une des revendications précédentes, comprenant des étapes de :
• détection, sur la base du format prédéterminé de la zone de lecture automatique ou de type code-barres (MRZ), de la signification de l'information personnalisée,
• sélection, dans une base d'images de référence montrant des modèles de documents structurés, d'une image de référence en fonction de la signification de l'information personnalisée et en fonction de l'emplacement et/ou des dimensions de la région d'intérêt localisée.

10. Procédé selon l'une des revendications précédentes, comprenant une création ou une mise à jour d'une image de référence montrant un modèle associé au document structuré à caractère personnel (D), la création ou mise à jour comprenant une inclusion (112) de la région d'intérêt de l'image acquise dans l'image de référence (IM).

11. Procédé selon l'une des revendications précédentes, comprenant en outre l'application d'un algorithme de suivi vidéo borné à la région d'intérêt localisée dans l'image acquise (IA), de sorte à suivre sélectivement le contenu de la région d'intérêt dans une séquence vidéo comprenant l'image acquise (IA).

12. Procédé selon l'une des revendications précédentes, comprenant en outre la mise en oeuvre d'une reconnaissance de caractères dans la région d'intérêt localisée.

13. Procédé selon la revendication précédente, comprenant :
• une répétition de l'étape de génération (106) à partir de la première chaîne de caractères déterminée, de sorte à obtenir plusieurs images intermédiaires (IS) montrant la deuxième chaîne de caractères représentant la même portion d'information personnalisée mais sous des représentations prédéterminées différentes,
• une répétition des étapes de détection (108) et de localisation (112) pour chaque image intermédiaire générée,
• pour chaque image intermédiaire, une estimation d'un indice de correspondance entre l'image intermédiaire et la région d'intérêt localisée,
• une sélection de l'image intermédiaire pour laquelle il a été estimé un indice de correspondance maximal parmi les indice de correspondances estimés,
• une mise en oeuvre de l'étape de reconnaissance de caractères sélectivement dans la région d'intérêt localisée sur la base de l'image intermédiaire sélectionnée.

14. Produit programme d'ordinateur comprenant des instructions de code pour l'exécution d'un procédé d'analyse selon l'une des revendications précédentes, lorsque ce programme est exécuté par au moins un processeur.

15. Dispositif de traitement (4) d'une image acquise (IA) montrant un document structuré à caractère personnel (D) appartenant à un titulaire, le dispositif comprenant :
• des moyens de détermination (102) d'une première chaîne de caractères à partir d'une zone de lecture automatique ou de type code-barres (MRZ) ayant un format prédéterminé et étant différente de la zone d'inspection visuelle (VIZ), la première chaîne de caractères représentant au moins une portion d'une information personnalisée propre au titulaire du document structuré (D),
• au moins un processeur configuré pour :
∘ générer (106), à partir de la première chaîne de caractères déterminée, une image intermédiaire (IS) montrant une deuxième chaîne de caractères représentant la même information personnalisée que la première chaîne de caractères,
∘ détecter (108) dans l'image acquise une troisième chaîne de caractères contenue dans la zone d'inspection visuelle (VIZ), la troisième chaîne de caractères représentant au moins une portion de la même information personnalisée, la détection (108) comprenant une comparaison de l'image intermédiaire (IS) avec une portion de l'image acquise dans la zone d'inspection visuelle (VIZ),
∘ localiser (112) dans la zone d'inspection visuelle (VIZ) une région d'intérêt de l'image acquise (IA) contenant la troisième chaîne de caractères.
